# EUROPÄISCHE PATENTSCHRIFT

(11) **EP 1 912 831 B1**
(45) Veröffentlichungstag und Bekanntmachung des Hinweises auf die Patenterteilung: **19.06.2019**
(21) Anmeldenummer: 06777803.5
(22) Anmeldetag: 17.07.2006
(51) Int. Cl.: B60R 21/01, B60W 30/085, B60R 21/34, B60R 21/0132

(54) **VERFAHREN ZUR ERKENNUNG EINES FUßGÄNGERAUFPRALLS IN EINEM FAHRZEUG**
METHOD FOR DETECTING A PEDESTRIAN IMPACT IN A VEHICLE
PROCÉDÉ POUR DETECTER UN IMPACT AVEC UN PIETON DANS UN VEHICULE

(30) Priorität: 05.08.2005 DE 102005036954
(43) Veröffentlichungstag der Anmeldung: 23.04.2008
(73) Patentinhaber: ROBERT BOSCH GMBH, 70442 Stuttgart (DE)
(72) Erfinder: GROEGER, Ulrike, Farmington Hills, 48331 (US); MACK, Frank, 70376 Stuttgart (DE); TILP, Jan, 70806 Kornwestheim (DE); WELLHOEFER, Matthias, 70499 Stuttgart (DE); STEINKOGLER, Sascha, 79106 Freiburg (DE)
(86) Internationale Anmeldenummer: PCT/EP2006/064300
(87) Internationale Veröffentlichungsnummer: WO 2007/017343

(56) Entgegenhaltungen:
- DE-A1- 10 346 214
- GB-A- 2 400 353
- US-A1- 2003 149 530
- US-A1- 2004 210 367

## Beschreibung

### Stand der Technik

Die Erfindung geht aus von einem Verfahren zur Erkennung eines Fußgängeraufpralls in einem Fahrzeug nach der Gattung des unabhängigen Patentanspruchs.

Aus DE 103 34 699 A1 ist bereits eine Vorrichtung zur Erkennung eines Fußgängeraufpralls bekannt, wobei eine Kontaktsensorik und eine Umfeldsensorik vorgesehen sind.

Aus DE 103 46 214 A1 st es bekannt, als Upfrontsensorik wenigstens einen Beschleunigungssensor zu verwenden. Dieses Signal kann sowohl für den Fußgängerschutz als auch den Insassenschutz verwendet werden. Aus US 2003/0149530 A1 ist es bekannt, das Potenzial für Kollisionen nämlich die Kollisionswahrscheinlichkeit die Zeit bis zu einer möglichen Kollision der Kollisionsort und sowie die weiteren Objektdaten zu ermitteln und aus diesen Daten Konfigurationsdaten für ein passives und aktives Schutzsystem zu erzeugen. Im passiven Schutzsystem wird die Schwere der Kollision geschätzt, um die passiven Schutzmittel entsprechend anzusteuern. Aus US 2004/0210367 A1 ist es bekannt, Beschleunigungssensoren für die Fußgängeraufprallerkennung zu verwenden. Dabei wird geprüft, ob es sich bei dem Aufprallobjekt um ein Fußgänger handelt oder nicht. Bei einer sehr schweren Kollision wird auch der Insassenschutz aktiviert

### Vorteile der Erfindung

Das erfindungsgemäße Verfahren zur Erkennung eines Fußgängeraufpralls in einem Fahrzeug mit den Merkmalen des unabhängigen Patentanspruchs hat demgegenüber den Vorteil, dass ein Signal, das einen Misuse-Fall kennzeichnet, wenigstens einem weiteren Fahrzeugsystem zur Verfügung gestellt wird, so dass dieses das Signal auswerten kann und entsprechende Einstellung bzw. Ansteuerung vornehmen kann. Damit wird durch die Vernetzung von unterschiedlichen Systemen eine höhere Sicherheit und präzisere Ansteuerung von Fahrzeugsystemen erreicht.

Erfindungskennzeichne ist, dass als das weitere Fahrzeugsystem dem das Signal, das den Misuse-Fall kennzeichnet, übermittelt werden, eine Fahrdynamikregelung und/oder eine Getriebesteuerung und/oder ein Bremssystem und/oder ein Steuergerät zur Ansteuerung von Personenschutzmitteln ist. Diese Systeme profitieren von dem Signal, das den Misuse-Fall kennzeichnet, denn durch das Beschleunigungssignal werden bestimmte Situationen indiziert, die eine Aktion dieser Fahrzeugsysteme notwendig machen können. Damit wird eine erhöhte Sicherheit und ein besserer Fahrkomfort für den Fahrer erreicht.

In den abhängigen Ansprüchen finden sich vorteilhafte Weiterbildungen der im unabhängigen Patentanspruch angegebenen Verfahren zu Erkennung eines Fußgängeraufpralls in einem Fahrzeug.

Weiterhin ist es vorteilhaft, dass ein Prozessor der Vorrichtung den Misuse-Fall, also einen Nichtfußgängeraufprall, als Crash beispielsweise als Parkrempler oder Kleintieraufprall oder als Nicht-Kollisionsfall unterscheidet. Dies vermag der Prozessor durch eine Signalanalyse des Beschleunigungssignals vorzunehmen, beispielsweise durch eine Mustererkennung, vorzugsweise anhand von abgespeicherten Signalen. In weiteren Fahrzeugsystemen wird dann dieses Ergebnis, also Crash oder Nicht-Kollisionsfall, mitgeteilt. Diese Information führt zu einer präziseren Ansteuerung der entsprechenden Fahrzeugsysteme, insbesondere spart es Rechenzeit bei diesen weiteren Fahrzeugsystemen. Es ergeben sich also die Alternativen, Rohsignale, beispielsweise die Beschleunigungssignale, die selber den Misuse-Fall kennzeichnen, diesen anderen Fahrzeugsystemen zu übertragen oder bereits vorverarbeitete Daten, dass ein Misuse-Fall vorliegt und welcher Art dieser ist, so dass zentral eine Auswertung im Prozessor der erfindungsgemäßen Vorrichtung vorgenommen wird und die anderen Fahrzeugsysteme diese Bestimmung nicht mehr selbst durchführen müssen, was insgesamt Rechenzeit im gesamten Fahrzeug einspart.

Darüber hinaus ist es vorteilhaft, dass der Prozessor bei einem Nicht-Kollisionsfall weiterhin in der Lage ist, eine Schlechtwegstrecke zu identifizieren, und dass dann den anderen Fahrzeugsystemen das Signal derart übertragen wird, dass diese Schlechtwegstrecke identifiziert ist und zwar im Signal. Die Identifikation der Schlechtwegstrecke kann dahingehend verfeinert werden, dass ein so genanntes Waschbrett also eine unebene Strecke oder ein Schlagloch oder ein Bordstein identifiziert werden und dass das an die Fahrzeugsysteme übermittelte Signal dies kennzeichnet. Unter einem Waschbrett versteht man eine periodische Bodenstruktur mit einer Amplitude um 2cm und einer Wellenlänge von 20cm bis 1m.

Schließlich ist es auch von Vorteil, dass anhand des Beschleunigungssignals ein Personenschutzmittel in der Fahrgastzelle angesteuert werden.

### Zeichnung

Ausführungsbeispiele der Erfindung sind in der Zeichnung dargestellt und werden in der nachfolgenden Beschreibung näher erläutert.

Es zeigen:
- Figur 1: ein Blockschaltbild der erfindungsgemäßen Vorrichtung,
- Figur 2: ein erste Flussdiagramm und
- Figur 3: ein zweites Flussdiagramm.

### Beschreibung der Ausführungsbeispiele

In Fahrzeugen werden unterschiedliche elektronische Systeme eingebaut. Diese bestehen typischer Weise aus Sensoren, einem Steuergerät und einer Aktuatorik. Beispiele hierfür sind das Antiblockiersystem, das elektronische Stabilitätsprogramm, eine Antischlupfregelung und Personenschutzsysteme. Trotz einiger Vorschläge kommunizieren diese Systeme untereinander nur in geringem Maße. Um jedoch kostensparend immer mehr Informationen zusammen und auszuwerten ist eine Vernetzung notwendig.

Vorliegend wird ein Verfahren zur Erkennung eines Fußgängeraufpralls in einem Fahrzeug beschrieben, das mittels Beschleunigungssensoren, die auf der Innenseite der Stoßfängerverkleidung angebracht sind, einen Fußgängeraufprall erkennen soll. Nicht jeder Aufprall ist jedoch ein Fußgängeraufprall und auch nicht jedes Signal, das diese Beschleunigungssensorik aufzeichnet, repräsentiert überhaupt einen Aufprall. Daher ist es seine Aufgabe, einen Fußgängeraufprall von so genannten Misuse-Fällen zu diskriminieren. Misuse-Fälle sind also alle anderen Fälle, die zu relevanten Signalen in der Beschleunigungssensorik führen. Relevante Signale sind solche Signale, die über einer variablen oder vorgegebenen Rauschschwelle für das Beschleunigungssignal liegen und die dies auch für eine vorgegebene Zeit mindestens sind. Bei den Misuse-Fällen wird zwischen Crashsignalen also beispielsweise einem Kleintieraufprall oder Parkremplern und so genannten Nicht-Kollisionssignalen, die insbesondere von einer Schlechtwegstrecke oder anderen fahrdynamischen Bewegung herrühren, unterschieden. Besonders vorteilhaft im Sinne der Erfindung zeigen sich diese Nicht-Kollisionssignale für Steuergeräte, die nicht nur dem Personenschutz zugeordnet sind, wie etwa der Getriebesteuerung, dem ESP oder Bremssystemen. Bei Schlechtwegstrecken können insbesondere auch verschiedene Schlechtwegstrecken wie das so genannte Waschbrett oder Schlaglöcher oder Bordsteinüberfahrten analysiert werden.

Diese Schlechtwegstreckensignale können nicht nur zur Unterscheidung eines Fußgängeraufpralls aufgezeichnet werden, sondern auch zur Detektion von bestimmten Fahrdynamiksituationen, die dann weiteren Steuergeräten und/oder Funktionen zur Verfiigung stehen. Beispielsweise können Schlechtwegstreckensignale aufgrund einer bestimmten Amplitude und/oder einem Frequenzverhalten neben der Ansteuerung eines reversiblen Gurtstraffers zur Ansteuerung von fahrdynamischen Funktionen führen. Beispielsweise kann bei bestimmten Schlechtwegstrecken mittels der Detektion durch eine Fußgängerschutzsensorik ein Allradantrieb zugeschaltet werden. Weiterhin kann eine Detektion einer gefährlichen Schlechtwegstreckensituation mit großer Amplitude oder Resonanz, beispielsweise ein Waschbrett, bei bestimmten Geschwindigkeiten eine Bremsung veranlasst werden, um eine Zerstörung des Fahrzeugs zu vermeiden. Eine zusätzliche Möglichkeit, die Schlechtwegstreckensignale zu nutzen, ist die Ansteuerung einer aktiven Suspension, die das Schwanken des Fahrzeugs durch Gegensteuerung kompensieren kann.

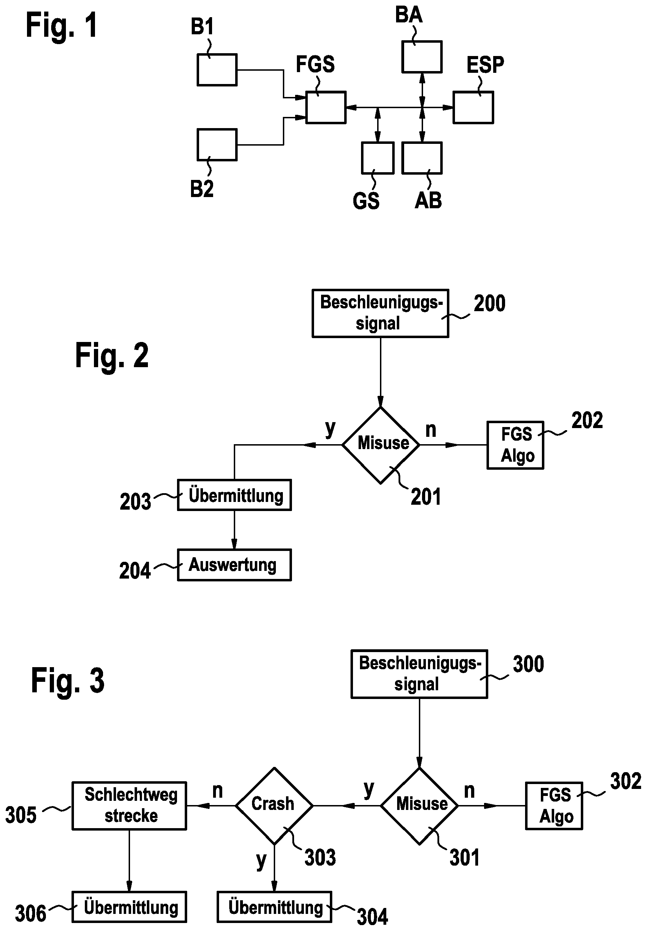

Figur 1 zeigt in einem Blockschaltbild die erfindungsgemäße Vorrichtung. Zwei Beschleunigungssensoren B1 und B2 sind an ein Steuergerät FGS für ein Fußgängerschutzsystem angeschlossen. Der Einfachheit halber sind hier die Personenschutzmittel, die das Steuergerät FGS ansteuern soll, die eine hochklappbare Motorhaube oder Außenairbags, nicht dargestellt. Beschleunigungssensoren B1 und B2 können vorzugsweise als mikromechanisch ausgebildete Beschleunigungssensoren an der Innenhaut der Stoßfängerverkleidung befestigt sein. Über Punkt-Zu-Punkt-Verbindungen können die Beschleunigungssensoren B1 und B2 mit dem Steuergerät FGS verbunden sein. Alternativ ist es möglich, dass eine Busverbindung, eine optische Verbindung oder eine Funkverbindung vorgesehen sind. Das Steuergerät FGS ist über eine Busleitung mit weiteren Fahrzeugsystemen verbunden. Als Bus kommt hier der CAN-Bus in Frage, es sind jedoch auch andere Bussysteme wie der LIN-Bus oder der MOST-Bus oder auch Punkt-Zu-Punkt-Verbindungen möglich. Als weitere Fahrzeugsysteme sind hier die Getriebesteuerung GS, das Airbagsteuergerät AB, das ESP-Steuergerät ESP und der Bremsassistent BA dargestellt. Es können mehr oder weniger Steuergeräte erfindungsgemäß mit dem Steuergerät FGS verbunden sein. Die Steuergeräte weisen alle Interface-Bausteine zur Signalübertragung, Prozessoren zur Signalverarbeitung und auch Speicher zur Ablage von Daten auf. Die Verbindung mit den Aktoren die die Steuergeräte AS, AB, ESP und BA ansteuern, sind hier der Einfachheit halber weggelassen worden.

Erfindungsgemäß überträgt das Steuergerät FGS ein Signal an die angeschlossenen Steuergeräte GS, AB, ESP und BA, wobei das Signal einen Misuse-Fall kennzeichnet. Das Signal kann dabei die Beschleunigungsdaten der Sensoren B1 und B2 bedeuten oder auch schon vorverarbeitete Daten, beispielsweise um welche Art von Misuse es sich handelt. Auch eine Glättung, eine Integration oder andere Signalvorverarbeitung kann das Steuergerät FGS zentral für die angeschlossenen Fahrzeugsysteme bereits vornehmen. Es ist jedoch möglich, dass die Steuergeräte BA, ESP, AB und GS selbst die Signalverarbeitung durchführen. Mit den Daten über einen Misuse-Fall können dann die Steuergeräte GS, AB, ESP und BA entsprechende Aktionen durchführen. Wird beispielsweise eine Schlechtwegstrecke durch das Steuergerät FGS erkannt, dann kann die Fahrzeuggeschwindigkeit durch aktives Bremsen heruntergefahren werden, um die Belastung des Fahrzeugs zu minimieren. Das Signal des Steuergeräts FGS, das an die Steuergeräte BA, ESP, AB und GS übertragen wird, kann auch zur Plausibilisierung von anderen Sensordaten, die die Steuergeräte bekommen, verwendet werden. Beispielsweise können die Steuergeräte selbst eigene Beschleunigungssensoren oder Drehraten oder Neigungssensoren aufweisen oder auch mit anderen externen Sensoren verbunden sein, die im Fahrzeug angeordnet sind. Dazu gehört beispielsweise auch eine kinematische Sensorplattform. Neben den hier dargestellten zwei Beschleunigungssensoren B1 und B2 können natürlich weitere Beschleunigungssensoren vorgesehen sein. Es ist auch möglich, dass lediglich ein einziger Beschleunigungssensor als Beschleunigungssensorik wirkt.

Figur 2 zeigt in einem Flussdiagramm das Verhalten der erfindungsgemäßen Vorrichtung bei einem Misuse-Fall. In Verfahrensschritt 200 wird das Beschleunigungssignal durch die Sensoren B1 und B2 aufgenommen. Das Steuergerät FGS kann dabei ein Mittelwert aus beiden Beschleunigungssignalen bilden oder beide Beschleunigungssignale der beiden Sensoren B1 und B2 getrennt verarbeiten und später kombinieren. In Verfahrensschritt 201 wertet dann der Prozessor im Steuergerät FGS aus, ob es sich um einen so genannten Misuse-Fall anhand der Beschleunigungssignale handelt. Ein Misuse-Fall unterscheidet einen Fußgängeraufprall von anderen Signalen, die relevant sind, also über der Rauschschwelle für das Beschleunigungssignal oder für ein integriertes Beschleunigungssignal liegen. Dies wird in Verfahrensschritt 201 geprüft. Liegt kein Misuse-Fall vor, dann wird in Verfahrensschritt 202 der Fußgängerschutzalgorithmus durchlaufen, um zu bestimmen, ob Fußgängerschutzmittel wie die angebbare Fronthaube oder Außenairbags eingesetzt werden sollen. Liegt jedoch ein Misuse-Fall vor, dann wird in Verfahrensschritt 203 dies den angeschlossenen Steuergeräten BA, ESP, GS und AB übertragen. In Verfahrensschritt 204 erfolgt dann die Auswertung dieses Signals durch die Steuergeräte BA, ESP, GS und AB.

Figur 3 zeigt nun eine Verfeinerung dieses Verfahrens. Erneut wird in Verfahrensschritt 300 durch Beschleunigungssignale durch die Sensoren B1 und B2 erzeugt und an das Steuergerät FGS übertragen, so dass der Prozessor im Steuergerät FGS diese Signale verarbeiten kann. in Verfahrensschritt 301 wird nun anhand des Signals durch Signalsmerkmalsvergleich geprüft, ob ein Misuse-Fall vorliegt. Liegt kein Misuse-Fall vor, dann wird in Verfahrensschritt 302 der Fußgängerschutzalgorithmus auf das Beschleunigungssignal oder das verarbeitete Beschleunigungssignal angewendet. Liegt jedoch ein Misuse-File vor, dann wird in Verfahrensschritt 303 geprüft, ob es sich um ein Crash handelt. Dabei kann es sich beispielsweise um ein Parkrempler oder eine Kollision mit Kleintieren handeln. Auch dies wird anhand eines Merkmalsvergleichs durchgeführt. Dabei können abgespeicherte Daten mit den aufgenommenen Beschleunigungsdaten verglichen werden. Liegt ein Crash vor, dann wird in Verfahrensschritt 304 dieses Ergebnis den Steuergeräten BA, ESP, GS und AB übertragen. Liegt jedoch kein Crash vor, dann wird in Verfahrensschritt 305 geprüft, ob es sich um eine Schlechtwegstrecke handelt und wenn ja um welche Art von Schlechtwegstrecke. Dabei kann es sich beispielsweise um ein so genanntes Waschbrett handeln oder ein Schlagloch. Dieses Ergebnis wird dann in Verfahrensschritt 306 an die angeschlossenen Steuergeräte BA, ESP, GS und AB übertragen. Weitere charakteristische Schlechtwegstrecken können hier identifiziert werden, wiederum durch einen Mustervergleich.

## Patentansprüche

1. Verfahren zur Erkennung eines Fußgängeraufpralls in einem Fahrzeug mit einer Beschleunigungssensorik (B1, B2) im Bereich der Stoßfängerverkleidung zur Erzeugung eines Beschleunigungssignals, wobei in Abhängigkeit von dem Beschleunigungssignal der Fußgängeraüfprall erkannt wird, **dadurch gekennzeichnet, dass** in Abhängigkeit von dem Beschleunigungssignal ein Signal, das einen Misuse-Fall kennzeichnet, wenigstens einem weiteren Fahrzeugsystem (BA, ESP, GS, AB) zur weiteren Auswertung übermittelt, dass das wenigstens eine Fahrzeugsystem (BA, ESP, GS, AB) eine Fahrdynamikregelung (ESP) und/oder eine Getriebesteuerung (GS) und/oder ein Bremssystem (BA) ist.

2. Verfahren nach Anspruch 1, **dadurch gekennzeichnet, dass** die anhand des Beschleunigungssignals ein Misuse-Fall als Crash oder als Nicht-Kollisionsfall identifiziert, wobei nur bei einem Nicht-Kollisionsfall das Signal übermittelt wird.

3. Verfahren nach Anspruch 2, **dadurch gekennzeichnet, dass** bei einem Nicht-Kollisionsfall anhand des Beschleunigungssignals eine Schlechtwegstrecke identifiziert wird und das Signal die Schlechtwegstrecke kennzeichnet.

4. Verfahren nach Anspruch 3, **dadurch gekennzeichnet, dass** bei einer Schlechtwegstrecke ein Waschbrett und /oder ein Schlagloch und/oder einen Bordstein identifiziert und dass das Signal dies kennzeichnet.

5. Verfahren nach Anspruch 1, **dadurch gekennzeichnet, dass** in Abhängigkeit von dem Beschleunigungssignal ein Personenschutzmittel in der Fahrgastzelle angesteuert wird.

## Claims

1. Method for detecting a pedestrian impact in a vehicle with an acceleration sensor system (B1, B2) in the region of the bumper covering in order to generate an acceleration signal, wherein the pedestrian impact is detected as a function of the acceleration signal, **characterized in that** a signal which characterizes a case of misuse is transmitted, as a function of the acceleration signal, to at least one further vehicle system (BA, ESP, GS, AB) for further evaluation, **in that** the at least one vehicle system (BA, ESP, GS, AB) is a vehicle movement dynamics control system (ESP) and/or a transmission controller (GS) and/or a brake system (BA).

2. Method according to Claim 1, **characterized in that** a case of misuse is identified as a crash or as a non-collision situation the on the basis of the acceleration signal, wherein the signal is transmitted only in the case of a non-collision situation.

3. Method according to Claim 2, **characterized in that** in a non-collision situation a poor-quality underlying surface is identified on the basis of the acceleration signal and the signal characterizes the poor-quality underlying surface.

4. Method according to Claim 3, **characterized in that** in the case of a poor-quality underlying surface a washboard and/or a pothole and/or a curb stone are/is identified, and **in that** the signal characterizes this.

5. Method according to Claim 1, **characterized in that** a personal protection means in the passenger cell is actuated as a function of the acceleration signal.

## Revendications

1. Procédé pour détecter un impact avec un piéton dans un véhicule au moyen d'un système de capteurs d'accélération (B1, B2) dans la région de l'habillage du pare-chocs pour générer un signal d'accélération, l'impact avec un piéton étant détecté en fonction du signal d'accélération, **caractérisé en ce qu'**en fonction du signal d'accélération, un signal qui caractérise un cas de mauvaise utilisation est transmis à au moins un système de véhicule supplémentaire (BA, ESP, GS, AB) en vue d'une analyse ultérieure, **en ce que** l'au moins un système de véhicule (BA, ESP, GS, AB) est une régulation de la dynamique de conduite (ESP) et/ou une commande de la transmission (GS) et/ou un système de freinage (BA).

2. Procédé selon la revendication 1, **caractérisé en ce que** le identifie, à l'aide du signal d'accélération, un cas de mauvaise utilisation comme étant un impact ou comme n'étant pas un cas de collision, le signal étant transmis seulement dans un cas de non-collision.

3. Procédé selon la revendication 2, **caractérisé en ce que** dans un cas de non-collision, on identifie, à l'aide du signal d'accélération, une voie de circulation en mauvais état et le signal caractérise la voie de circulation en mauvais état.

4. Procédé selon la revendication 3, **caractérisé en ce que** dans le cas d'une voie de circulation en mauvais état, une "tôle ondulée" et/ou un nid de poule et/ou une bordure de trottoir sont identifiés et **en ce que** le signal les caractérise.

5. Procédé selon la revendication 1, **caractérisé en ce qu'**en fonction du signal d'accélération, un moyen de protection de personnes est activé dans l'habitacle du véhicule.
